# EUROPÄISCHE PATENTSCHRIFT

(11) **EP 1 139 675 B1**
(45) Veröffentlichungstag und Bekanntmachung des Hinweises auf die Patenterteilung: **02.08.2006**
(21) Anmeldenummer: 01103260.4
(22) Anmeldetag: 12.02.2001
(51) Int. Cl.: H04Q 3/62, H04M 3/54

(54) **Verfahren zur Aktualisierung von Rufumschaltungszielen in einem Kommunikationsnetz**
Method for updating call transfer destinations in a communication network
Procédé pour la mise à jour de destinations de transfert d'appel dans un réseau de télécommunication

(30) Priorität: 31.03.2000 DE 10016245
(43) Veröffentlichungstag der Anmeldung: 04.10.2001
(73) Patentinhaber: SIEMENS AKTIENGESELLSCHAFT, 80333 München (DE)
(72) Erfinder: Catley, Ian, 82178 Puchheim (DE); Gartner, Martin, 82024 Taufkirchen (DE); Honold, Stefan, 81476 Muenchen (DE); Speitkamp, Burkhard, 81479 Muenchen (DE); Von Ow, Hans-Peter, Dr., 81379 Muenchen (DE)

(56) Entgegenhaltungen:
- BOOM W ET AL: "NEW GROUP FEATURE COLLECTION FOR SOPHO-S ISPBXS" PHILIPS TELECOMMUNICATION REVIEW, Bd. 51, Nr. 3, 1. Dezember 1993 (1993-12-01), Seiten 10-16, XP000457193 EINDHOVEN, NL
- PATENT ABSTRACTS OF JAPAN vol. 012, no. 118 (E-600), 13. April 1988 (1988-04-13) & JP 62 245756 A (NEC CORP), 27. Oktober 1987 (1987-10-27)
- PATENT ABSTRACTS OF JAPAN vol. 010, no. 069 (E-389), 18. März 1986 (1986-03-18) & JP 60 218959 A (FUJITSU KK), 1. November 1985 (1985-11-01)

## Beschreibung

Durch ein Einrichten von integrierten Vorzimmeranlagen werden in einer Nebenstellenanlage Teamfunktionen verfügbar gemacht. Beim Einrichten einer integrierten Vorzimmeranlage werden ausgewählte Teilnehmeranschlüsse zu einer Vorzimmergruppe zusammengefaßt, die Rolle der Teilnehmeranschlüsse definiert und die Beziehungen zwischen den einzelnen Teilnehmeranschlüssen innerhalb der Vorzimmergruppe festgelegt. Die definierbaren Rollen sind Chef, Sekretär und Vertretungssekretär. Die Festlegung der Beziehungen der Teilnehmeranschlüsse innerhalb einer Vorzimmergruppe erfolgt durch eine Zuordnung eines Chefteilnehmeranschlusses zu einem Sekretärteilnehmeranschluss oder eines Sekretärteilnehmeranschlusses zu einem Vertretungssekretärteilnehmeranschluß.

Im Kommunikationssystem HICOM der Firma Siemens steht eine anlageninterne Chef- und Sekretär zur Verfügung mit maximal vier Cheffernsprechern und maximal zwei Sekretärfernsprechern je Vorzimmeranlage (HICOM 300E V 2.0, Beschreibung der Leistungsmerkmale, Kap. 4.30 und Kap. 6.3.1, 23.04.1999, Siemens Sachnummer: P31003-G1036-L100-3-18). Ein an einen Cheffernsprecher gerichteter Anruf wird in einem Standardbetriebsmodus an einen Erstsekretärfernsprecher vermittelt und am Cheffernsprecher sowie gegebenenfalls an einem weiteren Sekretärfernsprecher signalisiert. Der Anruf kann sowohl vom Cheffernsprecher als auch von dem weiteren Sekretärfernsprechern aus übernommen werden. Nach einer Rufumschaltung zum Cheffernsprecher wird in einem weiteren Betriebsmodus ein an den Cheffernsprecher gerichteter Anruf direkt zu diesem vermittelt und gegebenenfalls an den Sekretärfernsprechern signalisiert. Der jeweilige Betriebsmodus sowie die jeweilige Rufumschaltung wird am Cheffernsprecher und an den zugeordneten Sektretäfernsprechern signalisiert. Die Teamfunktion für eine Vorzimmeranlage stehen bislang nur innerhalb einer Nebenstellenanlage zur Verfügung.

Aus W. Boom et al., "New Group Feature Collection for SOPHO-S ISPBXS", Philips Communication Review, Bd. 51, Nr. 3, 1. Dezember 1993, Seite 10-16, XP000457193 ist eine Nebenstellenanlage beschrieben, bei der von einem Sekretärfernsprecher aus ein Vertretungsziel für einen Teilnehmeranschluß bestimmt werden kann. Dabei wird das Vertretungsziel zum neuen Rufumschaltungsziel für an einen Cheffernsprecher gerichtete Anrufe.

Der vorliegenden Erfindung liegt die Aufgabe zugrunde, ein Verfahren zur kommunikationsanlagenübergreifenden Aktualisierung von für Teamfunktionen genutzten Rufumschaltungszielen in einem Kommunikationsnetz anzugeben.

Diese Aufgabe wird erfindungsgemäß durch ein Verfahren mit den in Anspruch 1 angegebenen Merkmalen gelöst.

Vorteilhafte Weiterbildungen des erfindungsgemäßen Verfahrens sind den Ansprüchen 2 bis 10 zu entnehmen.

Beim erfindungsgemäßen Verfahren wird ein durch eine Benutzereingabe an einem ersten Teilnehmeranschluß geändertes Rufumschaltungsziel für einen zweiten Teilnehmeranschluß in einem zugeordneten Speicher zusammen mit einem Ausgangspunkt einer Rufumschaltung als Rufumschaltungsinformation abgespeichert. Den Ausgangspunkt der Rufumschaltung bildet dabei der zweite Teilnehmeranschluß. Dies bedeutet, daß durch die Benutzereingabe an dem ersten Teilnehmeranschluß für den zweiten Teilnehmeranschluß ein neues Rufumschaltungsziel ausgewählt wird. Des weiteren stellt ein zu dem ersten Teilnehmeranschluß zugeordneter Speicher einen Speicher dar, in dem zu dem Teilnehmeranschulß gehörige Informationen abgespeichert sind. Die abgespeicherte Rufumschaltunginformation wird an eine Steuerungseinheit gesendet, die dem zweiten Teilnehmeranschluß als Ausgangspunkt der Rufumschaltung zugeordnet ist. Die Steuerungseinheit muß nicht ausschließlich dem zweiten Teilnehmeranschluß zugeordnet sein, sondern sie kann entsprechende Funktionen auch für weitere Teilnehmeranschlüsse wahrnehmen. In der Steuerungseinheit wird überprüft, ob eine durch die Rufumschaltungsinformation angegebene Rufumschaltung bereits eingerichtet ist, wobei in Abhängigkeit vom Überprüfungsergebnis eine Rufumschaltung eingerichtet wird.

Ein wesentlicher Aspekt des erfindungsgemäßen Verfahrens ist in der dynamischen Aktualisierung der Rufumschaltungsinformationen für den zweiten Teilnehmeranschluß als Ausgangspunkt einer Rufumschaltung zu sehen. Ein aktualisiertes Rufumschaltungsziel kann damit stets an einem dem zweiten Teilnehmeranschluß zugeordneten Cheffernsprecher angezeigt werden. Des weiteren kann von einem Sekretärfernsprecher, der dem ersten Teilnehmeranschluß zugeordnet ist, durch Benutzereingabe eine bislang eingerichtete Rufumschaltung umprogrammiert werden, so daß der erste Teilnehmeranschluß zum neuen netzweiten Rufumschaltungsziel einer vom zweiten Teilnehmeranschluß ausgehenden Rufumschaltung wird. Am Cheffernsprecher kann dies aufgrund der dynamisch aktualisierten Rufumleitungsinformation signalisiert werden. Des weiteren kann von einem Sekretärfernsprecher aus ein netzweites Vertretungsziel für den ersten Teilnehmeranschluß bestimmt werden, wodurch das Vertretungsziel zum neuen Rufumschaltungsziel für an den jeweiligen Cheffernsprecher gerichtete Anrufe wird.

Entsprechend einer bevorzugten Weiterbildung des erfindungsgemäßen Verfahrens wird die an die Steuerungseinheit gesendete Rufumschaltungsinformation in Abhängigkeit vom Überprüfungsergebnis in einem dem zweiten Teilnehmeranschluß zugeordneten Speicher abgelegt. Beispielsweise kann dadurch die Rufumschaltungsinformation an einem dem zweiten Teilnehmeranschluß zugeordneten Teilnehmerendgerät angezeigt werden.

Bei einer vorteilhaften Ausgestaltung des erfindungsgemäßen Verfahrens wird ein an den zweiten Teilnehmeranschluß gerichteter Anruf in einem ersten Betriebsmodus an diesen Teilnehmeranschluß vermittelt und an dem ersten Teilnehmeranschluß für eine Anrufübernahme signalisiert. Vorzugweise wird ein an den zweiten Teilnehmeranschluß gerichteter Anruf in einem zweiten Betriebsmodus an einen ausgewählten ersten Teilnehmeranschluß vermittelt und an dem zweiten bzw. einem weiteren ersten Teilnehmeranschluß für eine Anrufübernahme signalisiert.

Die Erfindung wird nachfolgend an einem Ausführungsbeispiel anhand der Zeichung näher erläutert.

Es zeigt:

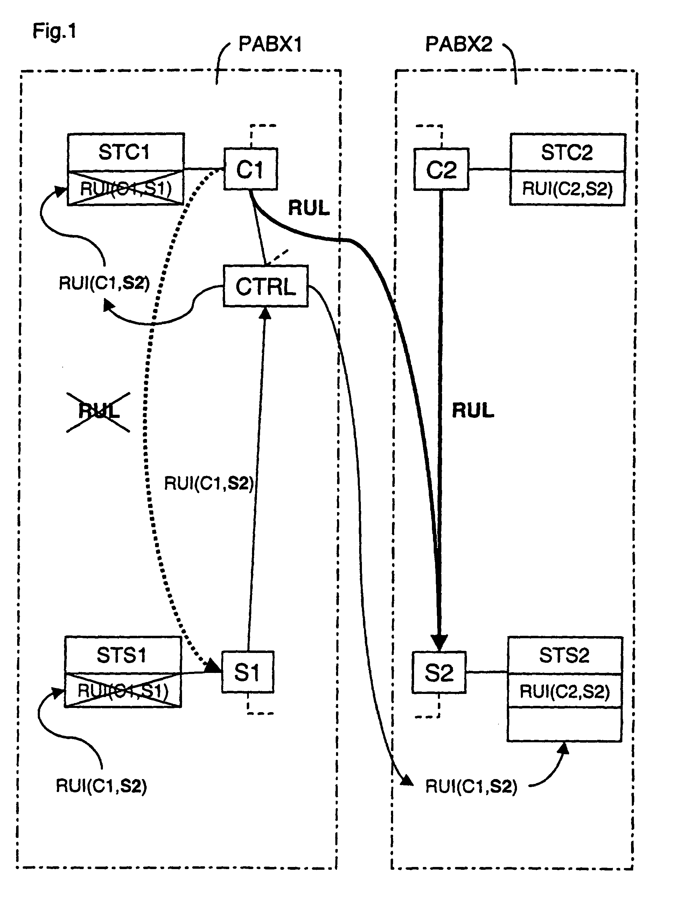

- Figur 1: ein Kommunikationsnetz mit zwei Kommunikationsanlagen und mehreren in Beziehung zueinander stehenden ersten und zweiten Teilnehmeranschlüssen.

In Figur 1 ist ein Kommunikationsnetz mit zwei Nebenstellenanlagen PABX1, PABX2 sowie zwei ersten Teilnehmeranschlüssen S1, S2 und zwei zweiten Teilnehmeranschlüssen C1, C2. Den ersten Teilnehmeranschlüssen S1, S2 und den zweiten Teilnehmeranschlüssen C1, C2 ist jeweils ein nicht näher dargestellter Sekretär- bzw. Cheffernsprecher zugeordnet. Nachfolgend werden die ersten Teilnehmeranschlüsse als Sekretäranschlüsse und die zweiten Teilnehmeranschlüsse als Chefanschlüsse bezeichnet. Der Chefanschluß C1 und der Sekretäranschluß S1 sind der Nebenstellenanlage PABX1 zugeordnet, während der Chefanschluß C2 und der Sekretäranschluß S2 der Nebenstellenanlage PABX2 zugeordnet sind.

Ein an einen Chefanschluß C1 oder C2 gerichteter Anruf wird in einem ersten Betriebsmodus direkt an den jeweiligen Chefanschluß vermittelt und an den Sekretäranschlüssen S1 und S2 für eine Anrufübernahme innerhalb einer netzweiten Anrufübernahmegruppe signalisiert. In einem zweiten Betriebsmodus wird ein an einen Chefanschluß C1 oder C2 gerichteter Anruf an einen ausgewählten Sekretäranschluß S1 oder S2 vermittelt und am betreffenden Chefanschluß C1 oder C2 sowie dem nicht ausgewählten Sekretäranschluß S1 oder S2 für eine Anrufübernahme signalisiert. Vorzugweise sind hierfür netzweite Anrufübernahmegruppen einzurichten. Einer ersten Anrufübernahmegruppe wird dabei der Chefanschluß C1 und jeweils ein virtueller Teilnehmeranschluß für die Sckretäranschlüsse S1 und S2 zugeordnet. Der Chefanschluß C2 und jeweils ein weiterer virtueller Teilnehmeranschluß für die Sekretäranschlüsse S1 und S2 werden einer zweiten netzweiten Anrufübernahmegruppe zugeordnet.

In einer Ausgangssituation des vorliegenden Beispiels sind Rufumschaltungen RUL vom Chefanschluß C1 zum Sekretäranschluß S1 und vom Chefanschluß C2 zum Sekretäranschluß S2 eingerichtet. In Speichern STC1, STC2, STS1, STS2, die jeweils einem Chef- bzw. Sekretäranschluß C1, C2, S1, S2 zugeordnet sind, sind zugehörige Rufumschaltungsinformationen RUI abgelegt. Die Rufumschaltungsinformationen weisen jeweils eine Angabe über einen Ausgangspunkt einer Rufumschaltung und eine Angabe über ein Rufumschaltungsziel auf.

Wird das Rufumschaltungsziel für den Chefanschluß C1 beispielsweise im Rahmen einer Auswahl eines Vertretungsziels für den Sekretäranschluß S1 auf den Sekretäranschluß S2 abgeändert, so wird eine aktualisierte Rufumschaltungsinformation RUI(C1, S2) in dem zum Sekretäranschluß S1 zugeordneten Speicher STS1 abgelegt. Alternativ ist es durchaus möglich die aktualisierte Rufumschaltungsinformation direkt in dem zum Sekretäranschluß S2 zugeordneten Speicher STS2 oder in einem nicht näher dargestellten Speicher für mehrere Teilnehmeranschlüsse abzuspeichern. Nachdem die Rufumschaltungsinformation RUI(C1, S2) im Speicher STS1 für den Sekretäranschluß S1 abgespeichert ist, wird sie an eine Steuerungseinheit CTRL gesendet, die dem Chefanschluß C1 als Ausgangspunkt der Rufumschaltung zugeordnet ist. Die Steuerungseinheit CTRL kann selbstverständlich auch weiteren Teilnehmeranschlüssen zugeordnet sein.

Durch fett hervorgehobene Verbindungslinien werden in Figur 1 bestehende Rufumschaltungen von Chefanschlüssen auf Sekretäranschlüsse kenntlich gemacht. Durch eine punktierte Verbindungslinie wird eine aufgehobene Rufumschaltung gekennzeichnet. Aktualisierte Rufumschaltungsinformationen in einem Speicher werden durch eine symbolisierte Streichung der jeweiligen bisherigen Rufumschaltungsinformationen veranschaulicht.

Falls ein Sekretäranschluß für mehrere Chefanschlüsse Rufumschaltungsziel war, werden in einem Vertretungsbetriebsmodus nach Eingabe eines für den betreffenden Sekretäranschluß ausgewählten Vertretungsziels Meldungen mit aktualisierten Rufumschaltungsinformationen an Steuerungseinheiten für Chefanschlüsse gesendet, die zuvor Ausgangspunkt einer Rufumschaltung zu dem genannten Sekretäranschluß waren.

In der Steuerungseinheit CTRL wird überprüft, ob eine durch die Rufumschaltungsinformation RUI(C1, S2) angegebene Rufumschaltung bereits eingerichtet ist. In Abhängigkeit vom Überprüfungsergebnis wird eine Rufumschaltung eingerichtet. Im vorliegenden Fall wird anhand der Rufumschaltungsinformation RUI(C1, S2) eine zuvor noch nicht bestehende Rufumschaltung RUL vom Chefanschluß C1 zum Sekretäranschluß S2 eingerichtet. Vor einem Einrichten einer neuen Rufumschaltung sollte geprüft werden, ob das in der Rufumschaltungsinformation RUI (C1, S2) angegebene Rufumschaltungsziel S2 existiert und in Betrieb ist. Vorteilhafterweise wird die in der Steuerungseinheit CTRL überprüfte Rufumschaltungsinformation RUI(C1, S2) nach einem Einrichten der zugehörigen Rufumschaltung in dem zum Chefanschluß C1 zugeordneten Speicher STC1 abgespeichert. Dies ermöglicht eine optische bzw. akustische Darstellung der aktualisierten Rufumschaltungsinformation RUI(C1, S2) an einem dem Chefanschluß zugeordneten Teilnehmerendgerät, beispielsweise auf dessen Display.

Die in der Steuerungseinheit überprüfte Rufumschaltungsinformation kann beispielweise noch durch eine Information über eine Aktivierung oder eine Deaktivierung einer Rufumschaltung ergänzt werden. Hierdurch ist es möglich, eine bereits eingerichtete Rufumschaltung nach einer Überprüfung in der Steuerungseinheit CTRL aufzuheben.

Nach Abspeichern der aktualisierten Rufumschaltungsinformation RUI(C1, S2) in dem zum Chefanschluß C1 zugeordneten Speicher STC1 wird die aktualisierte Rufumschaltungsinformation RUI(C1, S2) an den Sekretäranschluß S2 gesendet, der das neue Rufumschaltungsziel darstellt. Die Rufumschaltungsinformation RUI (C1, S2) wird vorzugsweise innerhalb einer Anrufübernahmegruppe, zu welcher der Chefanschluß C1 sowie die Sekretäranschlüsse S1 und S2 zugeordnet sind, an den Sekretäranschluß S2 gesendet. Durch eine derartige Maßnahme wird beispielsweise eine Zugriffskontrolle vereinfacht. Die an den Sekretäranschluß S2 gesendete Rufumschaltungsinformation RUI(C1, S2) wird durch eine in Figur 1 nicht näher dargestellte zusätzliche Angabe über eine Aktivierung oder eine Deaktivierung einer Rufumschaltung ergänzt. Im vorliegenden Fall wird die Rufumschaltungsinformation RUI(C1, S2) durch eine Angabe über die Aktivierung der Rufumschaltung ergänzt.

Der dem Sekretäranschluß S2 zugeordnete Speicher STS2 wird für einen Vergleich von dort abgelegten Rufumschaltungsinformationen mit der an Sekretäranschluß S2 gesendeten Rufumschaltungsinformation RUI (C1, S2) durchsucht. In Abhängigkeit des Ergebnisses des Vergleichs werden die in dem zum Sekretäranschluß S2 zugeordneten Speicher STS2 abgespeicherten Rufumschaltungsinformationen aktualisiert. Im vorliegenden Fall wird die an den Sekretäranschluß S2 gesendete Rufumschaltungsinformation RUI (C1, S2) in den Speicher STS2 eingetragen. Dies ermöglicht insbesondere eine Anzeige der aktualisierten Rufumschaltungsinformationen an einem dem Sekretäranschluß S2 zugeordneten Teilnehmerendgerät.

Beim Vergleich der in dem zum Sekretäranschluß S2 zugeordneten Speicher STS2 abgespeicherten Rufumschaltungsinformationen mit der an den Sekretäranschluß S2 gesendeten Rufumschaltungsinformation RUI (C1, S2) werden zunächst die jeweiligen Angaben über Ausgangspunkt der Rufumschaltung auf eine Übereinstimmung überprüft. Bei einer Übereinstimmung werden die jeweiligen Angaben über das Rufumschaltungsziel überprüft.

Falls die Angaben über das Rufumschaltungsziel übereinstimmen und in der gesendeten Rufumschaltungsinformation RUI(C1, S2) eine Aktivierung einer Rufumschaltung angegeben ist, wird die Einrichtung einer durch die Rufumschaltungsinformation RUI (C1, S2) angegebenen Rufumschaltung an einem dem Sekretäranschluß S2 zugeordneten Teilnehmerendgerät angezeigt. Falls die Angaben über das Rufumschaltungsziel nicht übereinstimmen oder in der gesendeten Rufumschaltungsinformation RUI(C1, S2) eine Deaktivierung einer Rufumschaltung angegeben ist, wird die Anzeige für eine Rufumschaltung vom jeweiligen Chefanschluß auf den Sekretäranschluß S2 auf dem zugeordneten Teilnehmerendgerät gelöscht.

Die Anwendung des erfindungsgemäßen Verfahrens ist nicht auf das hier beschriebene Ausführungsbeispiel beschränkt.

## Patentansprüche

1. Verfahren zur Aktualisierung von Rufumschaltungszielen in einem Kommunikationsnetz, bei dem
- ein durch eine Benutzereingabe an einem ersten Teilnehmeranschluß (S1, S2) geändertes Rufumschaltungsziel für einen zweiten Teilnehmeranschluß (C1, C2), der einen Ausgangspunkt einer Rufumschaltung bildet, in einem dem ersten Teilnehmeranschluß (S1, S2) zugeordneten Speicher (STS1, STS2) zusammen mit dem Ausgangspunkt der Rufumschaltung als Rufumschaltungsinformation (RUI) abgespeichert wird,
- die abgespeicherte Rufumschaltungsinformation (RUI) an eine Steuerungseinheit (CTRL) gesendet wird, die dem zweiten Teilnehmeranschluß (C1, C2) zugeordnet ist,
- in der Steuerungseinheit (CTRL) überprüft wird, ob eine durch die Rufumschaltungsinformation (RUI) angegebene Rufumschaltung eingerichtet ist,
- in Abhängigkeit vom Überprüfungsergebnis eine Rufumschaltung eingerichtet wird.

2. Verfahren nach Anspruch 1,
**dadurch gekennzeichnet,**
**daß** in Abhängigkeit vom Überprüfungsergebnis die an die Steuerungseinheit (CTRL) gesendete Rufumschaltungsinformation (RUI) in einem dem zweiten Teilnehmeranschluß (C1, C2) zugeordneten Speicher (STC1, STC2) abgespeichert wird.

3. Verfahren nach einem der Ansprüche 1 oder 2,
**dadurch gekennzeichnet,**
**daß** in einem Vertretungsbetriebsmodus des ersten Teilnehmeranschlusses (S1, S2) nach einer Eingabe eines für diesen Teilnehmeranschluß ausgewählten Vertretungsziels (S1, S2) Meldungen mit aktualisierten Rufumschaltungsinformationen (RUI) an Teilnehmeranschlüsse (C1, C2) gesendet werden, die zuvor als Ausgangspunkt einer Rufumschaltung zu dem ersten Teilnehmeranschluß eingerichtet waren.

4. Verfahren nach einem der Ansprüche 1 bis 3,
**dadurch gekennzeichnet,**
**daß** vor einem Einrichten einer Rufumschaltung geprüft wird, ob das Rufumschaltungsziel (S1, S2) existiert und in Betrieb ist, und daß in Abhängigkeit vom Überprüfungsergebnis die zugehörige Rufumschaltungsinformation in dem zum zweiten Teilnehmeranschluß (C1, C2) zugeordneten Speicher (STC1, STC2) abgelegt wird.

5. Verfahren nach einem der Ansprüche 1 bis 4,
**dadurch gekennzeichnet,**
**daß** ein an den zweiten Teilnehmeranschluß (C1, C2) gerichteter Anruf innerhalb einer Anrufübernahmegruppe, zu der dieser zweite Teilnehmeranschluß und mindestens ein für eine von dem zweiten Teilnehmeranschluß ausgehende Rufumschaltung vorgesehener erster Teilnehmeranschluß (S1, S2) zugeordnet sind, an den ersten Teilnehmeranschluß weitergeleitet und/oder dort signalisiert werden.

6. Verfahren nach einem der Ansprüch 1 bis 5,
**dadurch gekennzeichnet,**
**daß** nach einem Abspeichern einer Rufumschaltungsinformation (RUI) in einem dem zweiten Teilnehmeranschluß (C1, C2) zugeordneten Speicher Meldungen mit Rufumschaltungsinformationen (RUI) an weitere erste Teilnehmeranschlüsse (S1, S2) gesendet werden, daß die an die weiteren ersten Teilnehmeranschlüsse gesendeten Rufumschaltungsinformationen zusätzliche Angaben über eine Aktivierung oder eine Deaktivierung einer Rufumschaltung aufweisen, daß der jeweilige einem weiteren ersten Teilnehmeranschluß (S1, S2) zugeordnete Speicher (STS1, STS2) für einen Vergleich von dort abgelegten Rufumschaltungsinformationen mit den an die weiteren ersten Teilnehmeranschlüsse gesendeten Rufumschaltungsinformationen durchsucht wird, und daß die in dem jeweiligen einem weiteren ersten Teilnehmeranschluß zugeordneten Speicher abgelegten Rufumschaltungsinformationen in Abhängigkeit des Ergebnisses des Vergleichs aktualisiert werden.

7. Verfahren nach Anspruch 6,
**dadurch gekennzeichnet,**
**daß** die Meldungen mit Rufumschaltungsinformationen innerhalb einer Anrufübernahmegruppe, zu der mindestens ein weiterer erster für eine von dem zweiten Teilnehmeranschluß (C1, C2) ausgehende Rufumschaltung vorgesehener Teilnehmeranschluß (S1, S2) und der zweite Teilnehmeranschluß (C1, C2) zugeordnet sind, von dem zweiten Teilnehmeranschluß an den weiteren ersten Teilnehmeranschluß gesendet werden.

8. Verfahren nach einem der Ansprüche 1 bis 7,
**dadurch gekennzeichnet,**
**daß** in einem zu einem Teilnehmeranschluß (C!, C2, S1, S2) zugeordneten Speicher (STC1, STC2, STS1, STS2) abgespeicherte Rufumschaltungsinformationen (RUI) an dem jeweiligen Teilnehmeranschluß optisch und/oder akustisch signalisiert werden.

9. Verfahren nach einem der Ansprüche 1 bis 8,
**dadurch gekennzeichnet,**
**daß** ein an den zweiten Teilnehmeranschluß (C1, C2) gerichteter Anruf in einem ersten Betriebsmodus an diesen Teilnehmeranschluß vermittelt und an dem ersten Teilnehmeranschluß (S1, S2) für eine Anrufübernahme signalisiert wird.

10. Verfahren nach einem der Ansprüche 1 bis 9,
**dadurch gekennzeichnet,**
**daß** ein an den zweiten Teilnehmeranschluß (C1, C2) gerichteter Anruf in einem zweiten Betriebsmodus an einen ausgewählten ersten Teilnehmeranschluß (S1, S2) vermittelt und an dem zweiten Teilnehmeranschluß und/oder mindestens einem weiteren ersten Teilnehmeranschluß für eine Anrufübernahme signalisiert wird.

## Claims

1. Method for updating call redirection destinations in a communication network, in which
- a call redirection destination which has been changed by a user entry on a first subscriber line (S1, S2) is stored for a second subscriber line (C1, C2), which forms a point of origin of a call redirection, in a memory (STS1, STS2) associated with the first subscriber line (S1, S2) together with the point of origin of the call redirection as call redirection information (RUI),
- the stored call redirection information (RUI) is sent to a control unit (CTRL) associated with the second subscriber line (C1, C2),
- the control unit (CTRL) checks whether a call redirection indicated by the call redirection information (RUI) has been set up,
- a call redirection is set up on the basis of the result of the check.

2. Method according to Claim 1,
**characterized**
**in that** the call redirection information (RUI) sent to the control unit (CTRL) is stored in a memory (STC1, STC2) associated with the second subscriber line (C1, C2) on the basis of the result of the check.

3. Method according to one of Claims 1 or 2,
**characterized**
**in that**, in a stand-in operating mode of the first subscriber line (S1, S2), once a stand-in destination (S1, S2) selected for this subscriber line has been entered, messages containing updated call redirection information (RUI) are sent to subscriber lines (C1, C2) which had previously been set up as point of origin of a call redirection to the first subscriber line.

4. Method according to one of Claims 1 to 3,
**characterized**
**in that**, before a call redirection is set up, a check is carried out to determine whether the call redirection destination (S1, S2) exists and is in operation, and in that the associated call redirection information is stored in the memory (STC1, STC2) associated with the second subscriber line (C1, C2) on the basis of the result of the check.

5. Method according to one of claims 1 to 4,
**characterized**
**in that** a call directed to the second subscriber line (C1, C2) within a call acceptance group with which this second subscriber line and at least one first subscriber line (S1, S2) provided for a call redirection originating from the second subscriber line are associated is forwarded to the first subscriber line and/or is signalled there.

6. Method according to one of Claims 1 to 5,
**characterized**
**in that**, once call redirection information (RUI) has been stored in a memory associated with the second subscriber line (C1, C2), messages containing call redirection information (RUI) are sent to further first subscriber lines (S1, S2), in that the call redirection information sent to the further first subscriber lines contains additional indications of activation or deactivation of a call redirection, in that the respective memory (STS1, STS2) associated with a further first subscriber line (S1, S2) is searched for a comparison between call redirection information stored there and the call redirection information sent to the further first subscriber lines, and in that the call redirection information stored in the respective memory associated with a further first subscriber line is updated on the basis of the result of the comparison.

7. Method according to Claim 6,
**characterized**
**in that** the messages containing call redirection information are sent within a call acceptance group with which at least one further first subscriber line (S1, S2) provided for a call redirection originating from the second subscriber line (C1, C2) and the second subscriber line (C1, C2) are associated from the second subscriber line to the further first subscriber line.

8. Method according to one of Claims 1 to 7,
**characterized**
**in that** call redirection information (RUI) stored in a memory (STC1, STC2, STS1, STS2) associated with a subscriber line (C1, C2, S1, S2) is signalled visually and/or audibly on the respective subscriber line.

9. Method according to one of Claims 1 to 8,
**characterized**
**in that**, in a first operating mode, a call directed to the second subscriber line (C1, C2) is switched to this subscriber line and is signalled for call acceptance on the first subscriber line (S1, S2).

10. Method according to one of Claims 1 to 9,
**characterized**
**in that**, in a second operating mode, a call directed to the second subscriber line (C1, C2) is switched to a selected first subscriber line (S1, S2) and is signalled for call acceptance on the second subscriber line and/or on at least one further first subscriber line.

## Revendications

1. Procédé pour la mise à jour de destinations de transfert d'appel dans un réseau de télécommunication, dans lequel
- une destination de transfert d'appel, modifiée par une entrée d'un utilisateur sur un premier branchement d'abonné (S1, S2), pour un deuxième branchement d'abonné (C1, C2), qui forme un point de départ d'un transfert d'appel, est mémorisée, avec le point de départ du transfert d'appel, comme information de transfert d'appel (RUI) dans une mémoire (STS1, STS2) affectée au premier branchement d'abonné (S1, S2),
- l'information mémorisée de transfert d'appel (RUI) est émise à une unité de contrôle (CTRL) qui est affectée au deuxième branchement d'abonné (C1, C2),
- il est vérifié dans l'unité de contrôle (CTRL) si un transfert d'appel indiqué par une information de transfert d'appel (RUI) est configuré,
- un transfert d'appel est configuré en fonction du résultat de la vérification.

2. Procédé selon la revendication 1,
**caractérisé en ce**
**que** l'information de transfert d'appel (RUI) émise à l'unité de contrôle (CTRL) est mémorisée dans une mémoire (STC1, STC2) affectée au deuxième branchement d'abonné (C1, C2), en fonction du résultat de la vérification.

3. Procédé selon l'une des revendications 1 ou 2,
**caractérisé en ce**
**que** des messages comprenant des informations de transfert d'appel (RUI) mises à jour sont émis à des branchements d'abonné (C1, C2) dans un mode de fonctionnement de remplacement du premier branchement d'abonné (S1, S2) après une entrée d'une destination de remplacement (S1, S2) sélectionnée pour ce branchement d'abonné, ces branchements d'abonné ayant été configurés auparavant comme point de départ d'un transfert d'appel vers le premier branchement d'abonné.

4. Procédé selon l'une des revendications 1 à 3,
**caractérisé en ce**
**qu'**il est vérifié, avant une configuration d'un transfert d'appel, si la destination (S1, S2) du transfert d'appel existe et si elle est en service, et en ce que, en fonction du résultat de la vérification, l'information correspondante de transfert d'appel est mémorisée dans la mémoire (STC1, STC2) affectée au deuxième branchement d'abonné (C1, C2).

5. Procédé selon l'une des revendications 1 à 4,
**caractérisé en ce**
**qu'**un appel adressé au deuxième branchement d'abonné (C1, C2) dans un groupe de prise d'appel, auquel sont affectés ce deuxième branchement d'abonné et au moins un premier branchement d'abonné (S1, S2) prévu pour un transfert d'appel partant du deuxième branchement d'abonné, est transféré au premier branchement d'abonné et/ou y est signalé.

6. Procédé selon l'une des revendications 1 à 5,
**caractérisé en ce**
**qu'**après une mémorisation d'une information de transfert d'appel (RUI) dans une mémoire affectée au deuxième branchement d'abonné (C1, C2), des messages comprenant des informations de transfert d'appel (RUI) sont émis à d'autres premiers branchements d'abonné (S1, S2), en ce que les informations de transfert d'appel émises aux autres premiers branchements d'abonné présentent des indications supplémentaires concernant une activation ou une désactivation d'un transfert d'appel, en ce que la mémoire respective (STS1, STS2) affectée à un autre premier branchement d'abonné (S1, S2) est parcourue pour une comparaison d'informations de transfert d'appel, qui y sont mémorisées, avec les informations de transfert d'appel émises aux autres premiers branchements d'appel, et en ce que les informations de transfert d'appel mémorisées dans la mémoire respective affectée à un autre premier branchement d'abonné sont mises à jour en fonction du résultat de la comparaison.

7. Procédé selon la revendication 6,
**caractérisé en ce**
**que** les messages comprenant des informations de transfert d'appel dans un groupe de prise d'appel, auquel sont affectés au moins un autre premier branchement d'appel (S1, S2) prévu pour un transfert d'appel partant du deuxième branchement d'abonné (C1, C2) et le deuxième branchement d'abonné (C1, C2), sont émis par le deuxième branchement d'abonné à l'autre premier branchement d'abonné.

8. Procédé selon l'une des revendications 1 à 7,
**caractérisé en ce**
**que** des informations de transfert d'appel (RUI) mémorisées dans une mémoire (STC1, STC2, STS1, STS2) affectée à un branchement d'abonné (C1, C2, S1, S2) sont signalées optiquement et/ou acoustiquement au branchement d'abonné respectif.

9. Procédé selon l'une des revendications 1 à 8,
**caractérisé en ce**
**qu'**un appel adressé au deuxième branchement d'abonné (C1, C2) est transféré à ce branchement d'abonné, dans un premier mode de fonctionnement, et est signalé au premier branchement d'abonné (S1, S2) pour une prise d'appel.

10. Procédé selon l'une des revendications 1 à 9,
**caractérisé en ce**
**qu'**un appel adressé au deuxième branchement d'abonné (C1, C2) est transféré à un premier branchement d'appel (S1, S2) sélectionné, dans un deuxième mode de fonctionnement, et est signalé au deuxième branchement d'abonné et/ou à au moins un autre premier branchement d'abonné pour une prise d'appel.
